# EUROPEAN PATENT SPECIFICATION

(11) **EP 3 970 465 B1**
(45) Date of publication and mention of the grant of the patent: **06.11.2024**
(21) Application number: 21195220.5
(22) Date of filing: 07.09.2021
(51) Int. Cl.: A01B 69/00, A01B 69/04, A01B 59/06

(54) **WORK MACHINE**
ARBEITSMASCHINE
MACHINE DE TRAVAIL

(30) Priority: 16.09.2020 JP 2020155564
(43) Date of publication of application: 23.03.2022
(73) Proprietor: Kubota Corporation, Osaka-shi, Osaka 556-8601 (JP)
(72) Inventor: Okura, Kohei, Osaka (JP); Ishikawa, Shinnosuke, Osaka (JP); Koshida, Noriyuki, Osaka (JP)
(74) Representative: Osha BWB

(56) References cited:
- EP-A1- 1 338 934
- US-A1- 2014 058 637
- US-A1- 2020 113 123
- US-B2- 10 276 037

## Description

### BACKGROUND

### [Technical Field]

The present invention relates to a work machine for, for example, attaching a work device to a work vehicle.

### [Description of Related Art]

Conventionally, patent document 1 is known as a system for managing a work device to be attached to a work vehicle such as a tractor.

The work device in patent document 1 discloses a vehicle speed interlocking, wherein spray volume is changed in conjunction with the vehicle speed of a tractor.

Patent document 2 describes a system for controlling a work vehicle towing an agricultural implement having ground-engaging tools across a field. The system includes a vehicle controller configured to control operation of the work vehicle, an implement controller configured to control operation of the implement, and at least one sensor communicatively coupled to either or both of the vehicle controller and/or the implement controller. According to one embodiment of patent document 2, the system comprises an implement, a work vehicle, one or more implement controllers, a user interface of the work vehicle, and a vehicle controller communicatively coupled to the user interface via a wired or wireless connection to allow user input signals to be transmitted from the user interface to the vehicle controller. The user interface may be configured to receive various instructions from an operator of the work vehicle and may include one or more input devices.

### [Patent Document]

[Patent Document 1] JP 2020-54273 A
[Patent Document 2] US 2020/113123 A1

The work device in patent document 1 realizes unification of spray amount by changing spray volume in conjunction with the vehicle speed of a tractor. However, the vehicle speed interlocking in patent document 1 is set in advance to interlock with the vehicle speed on the work device side, and the work device acquires the vehicle speed from the tractor to make the spray amount interlock with the vehicle speed. That is, as disclosed in patent document 1, the work device operates being controlled by the vehicle speed or the like of the tractor.

In recent years, there have been demands for controlling a tractor from the work device side by making a request from the work device side to the tractor. However, there is no consistency between control of the work device by the tractor and control of the tractor from the work device, and this makes it impossible to improve workability.

### [Summary]

In light of the above, one or more embodiments of the present invention provide a work machine that can operate in accordance with respective requests from a work vehicle and a work device, and that can improve workability.

The technical means of one or more embodiments of the present invention may be as follows. According to one aspect, the present invention provides a work machine as defined in claim 1. Embodiments of the work machine are defined in the dependent claims.

According to one or more embodiments, a work machine comprises or is provided with a work vehicle capable of traveling, a work device attached to the work vehicle, a control device capable of executing a first control for controlling the work device from the work vehicle, and a second control for controlling the work vehicle based on a command from the work device, and a switching device for switching between the first control and the second control, i.e., from the first control to the second control and vice versa, as the case may be. When the switching device is OFF, the control device is configured to execute the first control, and when the switching device is ON, the control device is configured to execute the second control. Furthermore, the switching device is prevented from switching when a driver is not seated on a seat of the work vehicle.

According to one or more embodiments, the work machine controls vehicle speed of the work vehicle based on a command from the work device when the switching device has switched to the second control.

According to one or more embodiments, the work machine controls steering of the work vehicle based on a command from the work device when the switching device has switched to the second control.

According to one or more embodiments, the work machine comprises or is provided with an attaching device (i.e., a coupling device) capable of attaching the work vehicle and the work device (or coupling the work device to the work vehicle) and changing a posture of the work device.

According to one or more embodiments, the attaching device is controlled based on a command from the work device when the switching device has switched to the second control. However, as described in the following, additional or alternative controls are possible. Each of these controls may be performed by the control device.

According to one or more embodiments, the work machine comprises or is provided with an attaching device capable of attaching the work vehicle and the work device and changing a posture of the work device, wherein one or more of vehicle speed, steering, or the attaching device of the work vehicle is controlled based on a command from the work device when the switching device has switched to the second control.

According to one or more embodiments, the work machine comprises or is provided with an attaching device capable of attaching the work vehicle and the work device and changing a posture of the work device, wherein a posture of the work device is controlled based on a command from the work vehicle when the switching device has switched to the first control.

According to one or more embodiments of the work machine, the control device comprises or has an automatic driving control unit (i.e., an automatic driving controller) for automatically driving the work vehicle, and controls the work device based on the automatic driving of the work vehicle when the switching device has switched to the first control.

According to one or more embodiments, the switching device automatically switches to the first control when a setting for executing the second control is not possible in the control device.

According to one or more embodiments not making part of the claimed subject-matter, the switching device automatically switches to the second control when an automatic driving control unit for automatically driving the work vehicle is not provided in the work vehicle.

According to one or more embodiments not making part of the claimed subject-matter, the work machine comprises or is provided with a positioning device for positioning a work vehicle position, which is the position of the work vehicle, wherein the switching device switches based on the work vehicle position.

According to one or more embodiments not making part of the claimed subject-matter, the work machine comprises or is provided with a switching area creation unit for setting a work range of the work vehicle and creating switching between the first control and the second control for each of the set work ranges.

According to one or more embodiments, the work vehicle comprises a detection device that detects a state of the work vehicle and optionally includes at least one of a water temperature sensor, a fuel sensor, a motor rotation sensor, an accelerator pedal sensor, a steering angle sensor, an angle sensor, an inclination detection sensor, a speed sensor, a shaft rotation sensor, a battery sensor, and a position sensor.

According to one or more embodiments, in the first control, the control device controls the work device based on a detected value obtained from the detection device.

According to one or more embodiments, the work vehicle comprises an operating device that includes at least one of a shuttle lever, an ignition switch, a transmission lever, a transmission switch, a transmission lever, an accelerator, a pump switch, a height setting dial, a vehicle speed lever, a hydraulic operation tool, a rotation setting tool.

According to one or more embodiments, in the first control, the control device controls the work device based on an operation of the operation device.

According to one or more embodiments, the work vehicle is a tractor.

According to one or more embodiments, the work device is at least one of a tilling device, a fertilizer application device, a pesticide application device, a harvesting device, a reaping device, a dispersing device, a grass-collecting device, and a shaping device.

According to one or more embodiments of the present invention, it is possible to operate in accordance with respective requests from a work vehicle and a work device, and workability can be improved.

### [Brief Description of Drawings]

[FIG. 1] is a configuration diagram of a transmission device.
[FIG. 2] is a perspective diagram of a lifting device.
[FIG. 3] is a diagram illustrating a control block diagram of a work machine.
[FIG. 4] is a description diagram describing automatic driving.
[FIG. 5A] is an operation flow when vehicle speed is controlled by a second control.
[FIG. 5B] is an operation flow when controlling steering by the second control.
[FIG. 5C] is an operation flow when an attaching device is controlled by the second control.
[FIG. 6A] is a diagram illustrating a first variation of a control block diagram of a work machine.
[FIG. 6B] is a diagram illustrating a second variation of a control block diagram of a work machine.
[FIG. 6C] is a diagram illustrating a third variation of a control block diagram of a work machine.
[FIG. 7A] is a diagram illustrating an example of a setting screen M1.
[FIG. 7B] is a diagram illustrating an example of a setting screen M2.
[FIG. 8] is an overall view of a tractor.

### [Detailed Description]

The embodiments of the present invention will be described below with reference to drawings.

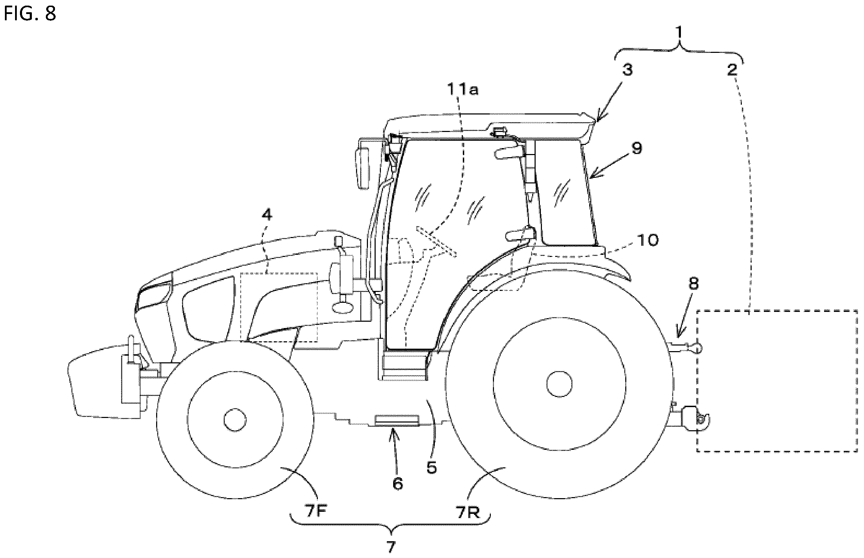

FIG. 8 illustrates an example of a work machine. A work machine is an agricultural machine such as a tractor for towing a work device, a rice transplanting machine having a work device, or a combine harvester. In one or more embodiments, the work machine is a tractor capable of towing a work device.

As illustrated in FIG. 8, a work machine 1 has a work device 2 and a work vehicle 3.

The work device 2 is a device for performing various work on farm fields (ground), crops planted in farm fields and the like, and is attached to the work vehicle 3. The work device 2 is a device such as a tilling device for tilling, a fertilizer application device for applying a fertilizer, a pesticide application device for applying a pesticide, a harvesting device for harvesting, a reaping device for reaping a pasture or the like, a dispersing device for dispersing a pasture or the like, a grass-collecting device for collecting a pasture or the like, or a shaping device for shaping a pasture or the like.

The working vehicle 3 is capable of traveling, and is provided with a vehicle body 6 having a traveling device 7, a motor 4, a transmission device 5, and a steering device 11. The traveling device 7 is a device having a front wheel 7F and a rear wheel 7R. The front wheel 7F may be a tire type or a crawler type. The rear wheel 7R may also be a tire type or a crawler type. The motor 4 is an internal combustion engine such as a gasoline engine or a diesel engine, or an electric motor or the like. In one or more embodiments, the motor 4 is a diesel engine.

The transmission device 5 can switch the propulsion force of the traveling device 7 by shifting, and can switch the forward and backward movement of the traveling device 7. The vehicle body 6 is provided with a cabin 9, and a driver's seat 10 is provided in the cabin 9.

The attaching device 8 is provided in a rear portion of the vehicle body 6. The work device 2 is attachable and detachable from the attaching device 8. In one or more embodiments, the attaching device 8 is a lifting device for lifting and lowering the mounted work device 2.

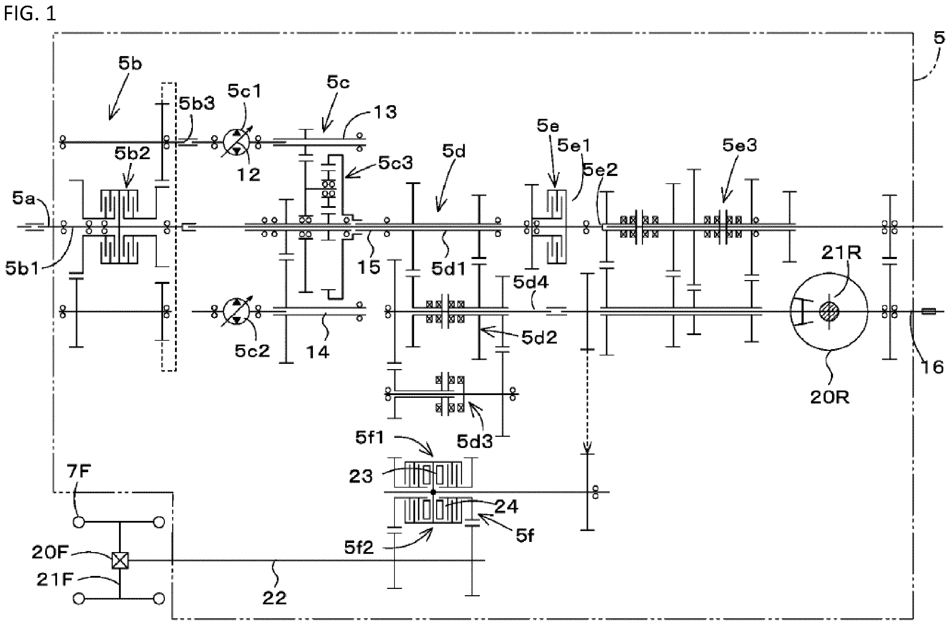

As illustrated in FIG. 1, the transmission device 5 is provided with a main shaft (propulsion shaft) 5a, a shuttle portion 5b, a main transmission portion 5c, a secondary transmission portion 5d, a PTO power transmission portion 5e, and a front transmission portion 5f. The propulsion shaft 5a is rotatably supported by a housing case of the transmission device 5, and power is transmitted to the propulsion shaft 5a from a crankshaft of the motor 4.

The shuttle portion 5b has a shuttle shaft 5b1 and a forward/backward switching portion 5b2. Power is transmitted to the shuttle shaft 5b1 from the propulsion shaft 5a. The forward/backward switching portion 5b2 is constituted by, for example, a hydraulic clutch, and switches the rotating direction of the shuttle shaft 5b1, that is, the forward/backward movement of the work machine 1, by turning the hydraulic clutch on and off.

The main transmission portion 5c is a continuous variable transmission mechanism for continuously changing input power. The continuous variable transmission mechanism has a hydraulic pump 5c1, a hydraulic motor 5c2, and a planetary gear mechanism 5c3. The hydraulic pump 5c1 rotates due to power from an output shaft 5b3 of the shuttle portion 5b. The hydraulic pump 5c1 is, for example, a variable displacement pump having a swash plate 12, and can change the flow rate of hydraulic fluid discharged from the hydraulic pump 5c1 by changing the angle of the swash plate 12 (swash plate angle). The hydraulic motor 5c2 is a motor that rotates due to hydraulic fluid discharged from the hydraulic pump 5c1 via an oil passage circuit such as piping. The rotation speed of the hydraulic motor 5c2 can be changed by changing the swash plate angle of the hydraulic pump 5c1 or changing the power input to the hydraulic pump 5c1.

The planetary gear mechanism 5c3 is constituted by a plurality of gears (gears) and a power transmission shaft such as an input shaft and an output shaft, and includes an input shaft 13 to which power of the hydraulic pump 5c1 is input, an input shaft 14 to which power of the hydraulic motor 5c2 is input, and an output shaft 15 for outputting power. The planetary gear mechanism 5c3 combines the power of the hydraulic pump 5c1 and the power of the hydraulic motor 5c2 and transmits the combined power to the output shaft 15.

Therefore, according to the main transmission portion 5c, the power output to the secondary transmission portion 5d can be changed by changing the swash plate angle of the swash plate 12 of the hydraulic pump 5c1, the rotation speed of the motor 4, or the like. Note that the main transmission portion 5c is constituted by a continuous variable transmission mechanism, but may also be a stepped transmission mechanism for shifting using gears.

The secondary transmission part 5d is a transmission mechanism having a plurality of stepped gears (gears) for shifting power, and changes the power input to the secondary transmission portion 5d from the output shaft 15 of the planetary gear mechanism 5c3 by appropriately changing the connection (engagement) of the plurality of gears and outputs said power (shifting). The secondary transmission portion 5d includes an input shaft 5d1, a first transmission clutch 5d2, a second transmission clutch 5d3, and an output shaft 5d4. The input shaft 5d1 is a shaft to which power from the output shaft 15 of the planetary gear mechanism 5c3 is input, and the input power is input to the first transmission clutch 5d2 and the second transmission clutch 5d3 via gears or the like. The input power is changed and output to the output shaft 5d4 by switching the respective connection and disconnection of the first transmission clutch 5d2 and the second transmission clutch 5d3. Power output to the output shaft 5d4 is transmitted to a rear wheel differential device 20R. The rear wheel differential device 20R rotatably supports a rear axle 21R to which the rear wheel 7R is attached.

The PTO power transmission portion 5e has a PTO clutch 5e1, a PTO propulsion shaft 5e2, and a PTO transmission portion 5e3. The PTO clutch 5e1 is constituted by, for example, a hydraulic clutch or the like, and is switched between a state wherein power from the propulsion shaft 5a is transmitted to the PTO propulsion shaft 5e2 (connected state) and a state wherein power from the propulsion shaft 5a is not transmitted to the PTO propulsion shaft 5e2 (disconnected state) by turning the hydraulic clutch on and off. The PTO transmission portion 5e3 includes a transmission clutch, a plurality of gears, and the like, and changes power input from the PTO propulsion shaft 5e2 to the PTO transmission portion 5e3 (rotation speed) and outputs this power.

Power from the PTO transmission portion 5e3 is transmitted to the PTO shaft 16 via gears or the like.

The front transmission portion 5f has a first front transmission clutch 5f1 and a second front transmission clutch 5f2. The first front transmission clutch 5f1 and the second front transmission clutch 5f2 are capable of transmitting power from the secondary transmission portion 5d, and for example, power from the output shaft 5d4 is transmitted via gears and a transmission shaft. Power from the first front transmission clutch 5f1 and the second front transmission clutch 5f2 can be transmitted to a front axle 21F via a front transmission shaft 22. Specifically, the front transmission shaft 22 is connected to a front wheel differential device 20F, and the front wheel differential device 20F rotatably supports the front axle 21F to which the front wheel 7F is attached.

The first front transmission clutch 5f1 and the second front transmission clutch 5f2 are constituted by a hydraulic clutch or the like. An oil passage is connected to the first front transmission clutch 5f1, and a control valve 23 to which the hydraulic fluid discharged from the hydraulic pump is supplied is connected to the oil passage. The first front transmission clutch 5f1 is switched between a connected state and a disconnected state by the opening of the control valve 23. An oil passage is connected to the second front transmission clutch 5f2, and a control valve 24 is connected to the oil passage. The second front transmission clutch 5f2 is switched between a connected state and a disconnected state by the opening of the control valve 24. The control valve 23 and control valve 24 are, for example, two-position switching valves with an electromagnetic valve, and are switched between a connected state and a disconnected state by exciting or degaussing a solenoid of the electromagnetic valve.

When the first front transmission clutch 5f1 is in a disconnected state and the second front transmission clutch 5f2 is in a connected state, the power of the secondary transmission portion 5d is transmitted to the front wheel 7F via the second front transmission clutch 5f2. This creates a four-wheel drive (4WD) in which the front wheel and the rear wheel are driven by power, and the rotation speed of the front wheel and the rear wheel are substantially equal (4WD constant speed state). Meanwhile, when the first front transmission clutch 5f1 is in a connected state and the second front transmission clutch 5f2 is in a disconnected state, four-wheel drive is created and the rotation speed of the front wheel is faster than the rotation speed of the rear wheel (4WD double speed state). When the first front transmission clutch 5f1 and the second front transmission clutch 5f2 are connected, the power of the secondary transmission portion 5d is not transmitted to the front wheel 7F, so that the rear wheel is driven by the power, and two-wheel drive (2WD) is performed.

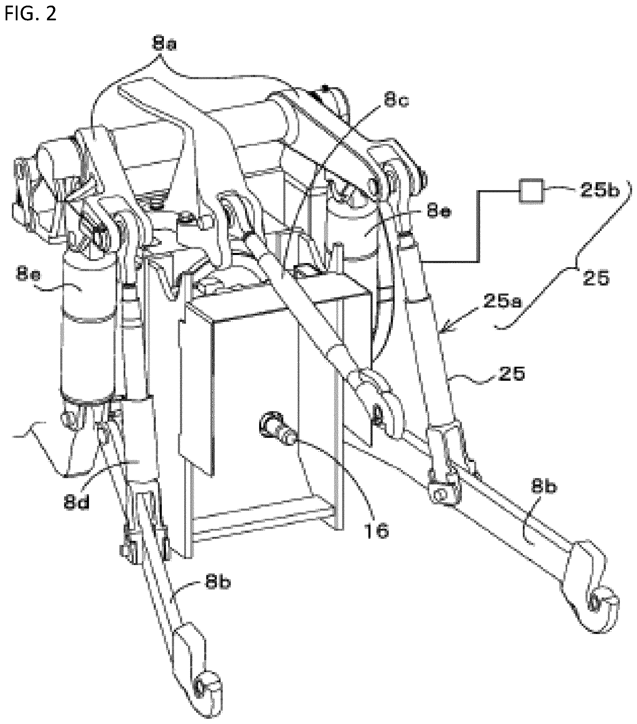

As illustrated in FIG. 2, the lifting device (attaching device) 8 has a lift arm 8a, a lower link 8b, a top link 8c, a lift rod 8d, and a lift cylinder 8e. The front end portion of the lift arm 8a is supported to be capable of swinging upward or downward on the rear upper portion of a case (mission case) housing the transmission device 5. The lift arm 8a is swung (lifted or lowered) by driving a lift cylinder 8e. The lift cylinder 8e is constituted by a hydraulic cylinder. The lift cylinder 8e is connected to the hydraulic pump via a control valve 34. The control valve 34 is a solenoid valve or the like, and extends and contracts the lift cylinder 8e.

The front end portion of the lower link 8b is supported to be capable of swinging upward or downward on the lower rear part of the transmission device 5. The front end portion of the top link 8c is supported to be capable of swinging upward or downward on the rear portion of the transmission device 5 above the lower link 8b. The lift rod 8d attaches the lift arm 8a and the lower link 8b. The work device 2 is attached to the rear portion of the lower link 8b and the rear portion of the top link 8c. When the lift cylinder 8e is driven (extended or contracted), the lift arm 8a is lifted and lowered, and the lower link 8b attached to the lift arm 8a is lifted and lowered via the lift rod 8d. Thus, the work device 2 swings (is lifted or lowered) upward or downward with the front portion of the lower link 8b as a fulcrum.

The lifting device 8 is provided with an angle changing device 25. The angle changing device 25 is a device for changing the posture of the work device 2 mounted on the vehicle body 6. The angle changing device 25 has a change cylinder 25a constituted by a hydraulic cylinder, and a control valve 25b. The change cylinder 25a is connected to the hydraulic pump via the control valve 25b. The control valve 25b is a solenoid valve or the like, and extends and contracts the change cylinder 25a. The change cylinder 25a attaches the lift arm 8a and the lower link 8b.

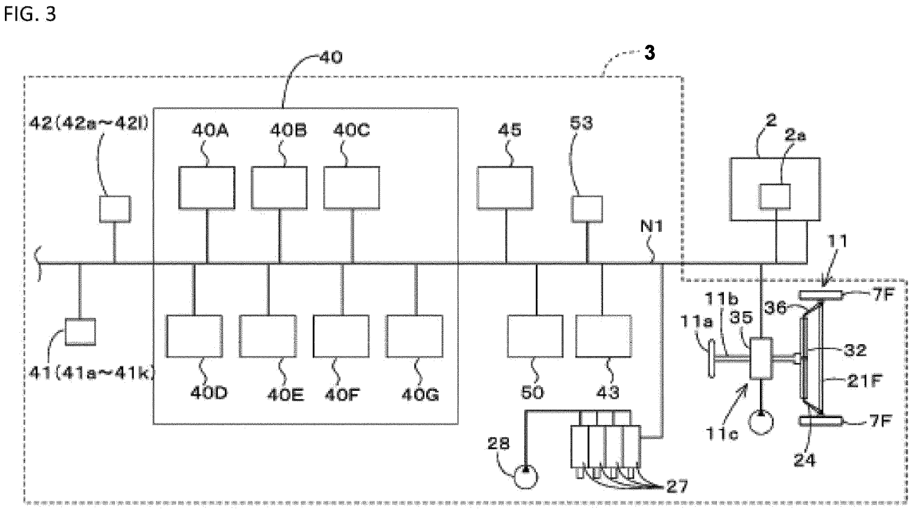

As illustrated in FIG. 3, the work machine 1 has a plurality of auxiliary valves 27. The plurality of auxiliary valves 27 are hydraulic switching valves to which hydraulic fluid is supplied from the hydraulic pump 28. The plurality of auxiliary valves 27 have an output port, and a hydraulic hose or the like can be connected to an optional output port. By connecting the hydraulic hose connected to the optional output port of the auxiliary valve 27 to a hydraulic attachment of the work device 2, various hydraulic attachments mounted on the working device 2 can be operated.

The steering device 11 has a steering wheel (steering wheel) 1 1a, a rotary shaft (steering shaft) 1 1b rotating in accordance with the rotation of the steering wheel 11a, and an auxiliary mechanism (power steering mechanism) 11c for assisting the steering of the steering wheel 11a. The auxiliary mechanism 11c includes a control valve 35 and a steering cylinder 32. The control valve 35 is, for example, a three-position switching valve switchable by moving a spool or the like. Moreover, the control valve 35 can be switched by steering the steering shaft 11b. The steering cylinder 32 is connected to an arm (knuckle arm) 36 for changing the direction of the front wheel 7F. Therefore, when the steering wheel 11a is operated, the steering direction of the front wheel 7F can be changed by switching the switch position and opening of the control valve 35 according to the steering wheel 11a, and extending and contracting the steering cylinder 32 to the left or right according to the switch position and opening of the control valve 35. Note that the steering device 11 described above is one example and is not limited to the configuration described above.

The work machine 1 is provided with a plurality of detection devices 41. The plurality of detection devices 41 are devices for detecting the state of the work machine 1, and include, for example, a water temperature sensor 41a for detecting water temperature, a fuel sensor 41b for detecting remaining fuel, a motor rotation sensor (rotation sensor) 41c for detecting the rotation speed of the motor 4, an accelerator pedal sensor 41d for detecting control input of an accelerator pedal, a steering angle sensor 41e for detecting a steering angle of the steering device 11, an angle sensor 41f for detecting an angle of the lift arm 8a, an inclination detection sensor 41g for detecting inclination of the vehicle body 6 in the width direction (right direction or left direction), a speed sensor 41h for detecting speed (vehicle speed) of the vehicle body 6, a PTO rotation sensor (rotation sensor) 41i for detecting rotation speed of a PTO shaft, a battery sensor 41j for detecting voltage of an accumulator such as a battery, a position sensor (positioning device) 41k for detecting a position of the vehicle body 6 based on a signal such as a positioning satellite, or the like. Note that the speed sensor 41h detects the vehicle speed by converting, for example, the rotation speed of the front axle 21F, the rotation speed of the rear axle 21R, the rotation speed of the front wheel 7F, the rotation speed of the rear wheel 7R, or the like, into the vehicle speed. Furthermore, the speed sensor 41h can also detect any of the rotating directions of the front axle 21F, the rear axle 21R, the front wheel 7F and the rear wheel 7R, and can also detect whether the work machine 1 (vehicle body 6) is moving forward or moving backward. The detection device 41 described above is merely one example, and is not limited to the sensors described above.

The work machine 1 is provided with a plurality of operation members (operating devices) 42. The plurality of operation members 42 may include a shuttle lever 42a for switching between forward movement and backward movement of the vehicle body 6, an ignition switch 42b for starting the motor 4 or the like, a PTO transmission lever 42c for setting the rotation speed of the PTO shaft, a transmission switching switch 42d for switching between either automatic transmission or manual transmission, a transmission lever 42e for manually switching a transmission stage (transmission level) of the transmission device 5, an accelerator 42f for increasing and decreasing vehicle speed, a pump switch 42g for operating to lift and lower the lifting device 8, a height setting dial 42h for setting the upper limit of the lifting device 8, a vehicle speed lever 42i for setting vehicle speed, a hydraulic operation tool 42j, a rotation setting tool 42k for setting the upper limit of the motor rotation speed, or the like.

Setting tools such as the transmission switching switch 42d, the height setting dial 42h, and the rotation setting tool 42k are provided in a console box provided on the side of the driver's seat 10. The operation of the vehicle body 6 can be set by a driver operating a setting tool (transmission switching switch 42d, height setting dial 42h, rotation setting tool 42k). Note that the operation member 42 described above is merely one example, and is not limited to that described above.

As illustrated in FIG. 3, the work machine 1 has a control device 40 and a storage unit 45. The control device 40 is a device for performing various controls of the work machine 1 and is constituted by a CPU, an electric/electronic circuit, and the like. The storage unit 45 is constituted by a non-volatile memory or the like, and stores various information.

The control device 40 includes a transmission control unit 40A, an engine control unit 40B, a PTO control unit 40C, a lifting control unit 40D, an automatic driving control unit 40E, an angle control unit 40F, and an auxiliary hydraulic control unit 40G.

The control device 40 and a control device 2a of the work device 2 are connected to an on-vehicle network N1 conforming to international standard ISO11783 (ISOBUS). That is, the transmission control unit 40A, the engine control unit 40B, the PTO control unit 40C, the lifting control unit 40D, the automatic driving control unit 40E, the angle control unit 40F, and the auxiliary hydraulic control unit 40G, and the control device 2a are connected to the on-vehicle network N1.

Note that the control device 40 does not need to include all of the transmission control unit 40A, the engine control unit 40B, the PTO control unit 40C, the lifting control unit 40D, the automatic driving control unit 40E, the angle control unit 40F, and the auxiliary hydraulic control unit 40G, and such are provided in the work machine 1 according to the specifications of the work machine 1. Furthermore, the transmission control unit 40A, the engine control unit 40B, the PTO control unit 40C, the lifting control unit 40D, the automatic driving control unit 40E, the angle control unit 40F, and the auxiliary hydraulic control unit 40G are provided on the integrated control device 40.

The transmission control unit 40A controls the transmission. In transmission control, when the automatic transmission function is enabled, either the main transmission portion 5c or the secondary transmission portion 5d is automatically switched to in accordance with the state of the work machine 1, and the transmission stage (transmission level) of the transmission device 5 is automatically changed to a predetermined transmission stage (transmission level). In transmission control, when the transmission switching switch 42d is switched to manual transmission, either the main transmission portion 5c or secondary transmission portion 5d is automatically switched to in accordance with the transmission stage (transmission level) set using the transmission lever 42e, and the transmission stage of the transmission device 5 is changed.

The transmission control unit 40A performs control (traveling switching control) of the traveling and driving state of the traveling device 7 (operation of the traveling device 7). In traveling switching control, when the shuttle lever 42a is operated to move forward, the vehicle body 6 is moved forward by switching the forward/backward switching portion 5b2 of the shuttle portion 5b to move forward. Furthermore, in forward switching control, when the shuttle lever 42a is operated to move backward, the vehicle body 6 is moved backward by switching the forward/backward switching portion 5b2 of the shuttle portion 5b to move backward.

In traveling switching control, when in 4WD, the first front transmission clutch 5f1 is in a disconnected state and the second front transmission clutch 5f2 is in a connected state. In traveling switching control, when in 4WD double speed, the first front transmission clutch 5f1 is in a connected state and the second front transmission clutch 5f2 is in a disconnected state. In traveling switching control, when in 2WD, the first front transmission clutch 5f1 and the second front transmission clutch 5f2 are in a connected state.

The engine control unit 40B performs engine control. In engine control, when the ignition switch 42b is operated to be ON, the motor 4 is started after going through a predetermined process, and when the ignition switch 42b is operated to be OFF, the driving of the motor 4 is stopped. In engine control, when the accelerator 42f is operated, the speed (vehicle speed) of the vehicle body 6 is changed by changing the rotation speed of the motor 4 (referred to as motor rotation speed) in accordance with control input of the accelerator 42f.

The PTO control unit 40C performs PTO control. In PTO control, when the PTO transmission lever 42c is operated, the rotation speed of the PTO shaft (referred to as PTO rotation speed) is changed by switching a PTO transmission gear built in the transmission device 5.

The lifting control unit 40D performs lifting control. In lifting control, when the manual lifting function is enabled, when the pump switch 42g is operated in a lifting direction (lifting side), the lift cylinder 8e is extended by controlling the control valve 34 to lift the rear end portion (end portion on the work device 2 side) of the lift arm 8a. In lifting control, when the manual lifting function is enabled, when the pump switch 42g is operated in a lowering direction (lowering side), the lift cylinder 8e is contracted by controlling the control valve 34 to lower the rear end portion (end portion on the work device 2 side) of the lift arm 8a. When the work device 2 is lifted by the lifting device 8, the lifting operation by the lifting device 8 is stopped when the position of the work device 2, that is, the angle of the lift arm 8a reaches the upper limit (height upper limit value) set by the height setting dial 42h.

In lifting control, when the backup function is enabled, the lift cylinder 8e is extended by the control valve 34 being automatically controlled when the vehicle body 6 has moved backward, to lift the rear end portion (end portion on the work device 2 side) of the lift arm 8a. In lifting control, when the auto-up function is enabled, when the steering angle of the steering device 11 is equal to or greater than a predetermined angle, the lift cylinder 8e is extended by automatically controlling the control valve 34, to lift the rear end portion (end portion on the work device 2 side) of the lift arm 8a.

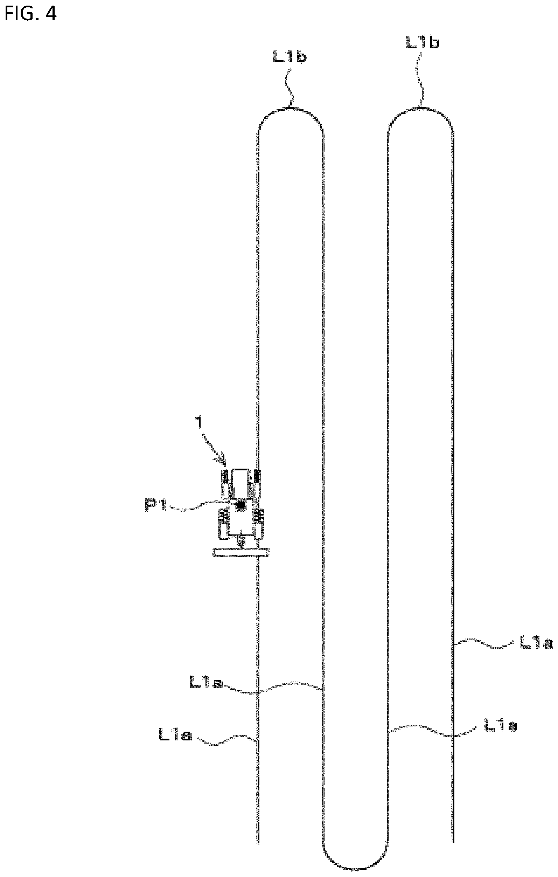

The automatic driving control unit 40E performs automatic driving control. As illustrated in FIG. 4, in automatic driving control, when automatic driving is effective, the steering angle of the steering device 11 is automatically controlled by controlling the control valve 35 such that a predetermined travel schedule line L1 matches a position (work vehicle position) p1 detected by the positioning sensor 41k. Specifically, when the work machine 1 is positioned at a straight forward portion L1a of the traveling schedule line L1, in automatic driving control, the steering of the work machine 1 (work vehicle 3) is performed so that the straight forward portion L1a matches the work vehicle position p1. Furthermore, when the work machine 1 is positioned on a turning portion L1b of the traveling schedule line L1, in automatic driving control, the steering of the work machine 1 (work vehicle 3) is performed such that the turning portion L1b matches the work vehicle position p1.

Furthermore, in automatic driving control, when automatic driving is effective, control to adjust the actual vehicle speed is performed by giving a command to the engine control unit 40B to change the motor rotation speed or giving a command to the transmission control unit 40A to change the transmission stage such that the vehicle speed (target vehicle speed) associated with the traveling schedule line L1 (straight forward portion 1a and turning portion 1b) matches the actual vehicle speed (actual vehicle speed).

Note that making automatic driving enabled or disabled is performed by a switch (driving switching switch) 421. The driving switching switch 421 can be switched ON/OFF and is installed around the driver's seat 10. When the operation switching switch 421 is ON, the automatic operation is enabled, and when it is OFF, the automatic operation is disabled. When automatic driving is ineffective, automatic driving control by the automatic driving control unit 40E is not executed. That is, when automatic driving is ineffective, the driver manually drives (manual driving) the work vehicle 3. In manual driving, manual driving can be performed by the driver operating the operation members 42 by the driver as described above.

The angle control unit 40F performs angle control. In angle control, when using the position function (fixing function), the length of the change cylinder 25a is fixed to a predetermined length by outputting a control signal to the control valve 25b. That is, the angle of the work device 2 in the width direction set by the angle changing device 25 (angle of the straight line connecting the lower links 8b and 8b horizontally) is fixed. In angle control, when using the horizontal function, the change cylinder 25a is extended and contracted by outputting a control signal to the control valve 25b, and the work device 2 set by the angle changing device 25 is horizontally maintained. In angle control, when using the inclination function, the change cylinder 25a is expanded and contracted by outputting a control signal to the control valve 25b, and the work device 2 set by the angle changing device 25 is maintained in parallel with a farm field (ground).

The auxiliary hydraulic control unit 40G controls the auxiliary valve (operation control valve) 27 to which a hydraulic hose or the like is connected among the plurality of auxiliary valves 27. For example, the auxiliary hydraulic control unit 40G performs control for switching the flow of hydraulic fluid output from the predetermined auxiliary valve 27 when the hydraulic operation tool 42j such as a swingable lever is operated. For example, when the hydraulic operation tool 42j is operated in the left direction, the auxiliary hydraulic control unit 40G excites the solenoid of the predetermined auxiliary valve 27 and moves the spool of the predetermined auxiliary valve 27 to make the flow direction of the hydraulic fluid in one direction. Furthermore, when the hydraulic operation tool 42j is operated in the right direction, the auxiliary hydraulic control unit 40G excites the solenoid of the predetermined auxiliary valve 27 and moves the spool of the predetermined auxiliary valve 27 to make the flow direction of the hydraulic fluid in the other direction. Thus, the hydraulic attachment of the work device 2 can be operated by the auxiliary valve 27.

As illustrated in FIG. 3, the on-vehicle network N1 is connected to a communication control unit 43 corresponding to a TIM (tractor implement management system). The communication control unit 43 is constituted by a CPU, electric and electronic components, or the like, and communicates with the control device 2a of the work device 2 by a predetermined communication protocol. That is, the communication control unit 43 is electrically connected to the work device 2 via the on-vehicle network N1, and can communicate in both directions. The control device 2a can output various information relating to the work device 2 to the on-vehicle network N1.

The communication control unit 43 obtains device information via the on-vehicle network N1, and outputs the obtained device information the control device 40. That is, the communication control unit 43 has a function for monitoring the device information output from the control device 2a of the work device 2 to the work vehicle 3 and transmitting it to the control device 40 of the work vehicle 3.

The device information is information requested from the work device 2 to the work vehicle 3 (request information), state information indicating the state of the work device 2 (state information), or the like. For example, the requested information is vehicle speed (requested vehicle speed), PTO rotation speed (requested rotation speed), hydraulic pressure (requested hydraulic pressure), shift amount (requested shift amount), lifting (requested lifting), height (requested height), or the like. The status information is information indicating a state of the work device 2 such as an error.

Meanwhile, the control device 40 can execute at least one of first control for controlling the work device 2 from the work vehicle 3 and second control for controlling the work vehicle 3 based on a command from the work device 2, for example, request information.

In the first control, the control device 40 controls the work device 2 based on a command from equipment or the like mounted in the working vehicle 3. For example, in the first control, the control device 40 controls the work device 2 based on the operation of the operation member 42 provided in the work vehicle 3 or a detected value that the control device 40 obtained from the detection device 41 (rotation speed of the motor 4, the steering angle of the steering device 11, the angle of the lift arm 8a, the inclination in the width direction of the vehicle body 6, the vehicle speed of the vehicle body 6, the rotation speed of the PTO shaft, the steering direction, and the steering amount).

Furthermore, in the second control, the control device 40 controls the work vehicle 3 based on a command (request information) from the control device 2a of the work device 2.

The working machine 1 is provided with a switching device 53 for switching between the first control and second control. The switching device 53 can be switched ON/OFF and is for example installed around the driver's seat 10. When the switching device 53 is OFF, the first control is set to be performed by the control device 40. When the switching device 53 is ON, the second control is set to be performed by the control device 40.

Note that when the driver is seated on the driver's seat 10, the first control and the second control are switched by operating the switching device 53, and when the driver is not seated on the driver's seat 10, switching may be prevented. For example, a seating sensor for detecting whether a driver is seated is provided on the driver's seat 10, and when the seating sensor detects seating, the control device 40 receives the turning ON/OFF of the switching device 53,_{,} and when the seating sensor does not detect seating, the control device 40 does not receive the turning ON/OFF of the switching device 53.

When the driver switches to the first control using the switching device 53 while manually driving the work vehicle 3, the control device 40 controls the posture of the work device 2 with respect to the ground. Specifically, the lifting control unit 40D of the control device 40 changes the posture of the work device 2 by lifting the work device 2 or lowering the work device 2 as first control when the pump switch 42g has been operated as described above.

Meanwhile, when switched to the first control using the switching device 53 while the work vehicle 3 is being automatically driven, the control device 40 controls the work device 2 based on the automatic driving of the work vehicle 3. Specifically, when the work vehicle 3 is positioned on the straight forward portion L1a while being automatically driven, the lifting control unit 40D of the control device 40 contracts the lift cylinder 8e and maintains a posture in which the work device 2 is lowered, and when the work vehicle 3 is positioned on the turning portion L1b while being automatically driven, extends the lift cylinder 8e and maintains a posture in which the work device 2 is lifted. That is, the control device 40 performs an auto-up for automatically lifting the work device 2 when the work vehicle 3 reaches the turning portion L1b when set to the first control and automatic driving control is enabled.

When switched to the second control using the switching device 53 while operating under manual driving or automatic driving, the control device 40 controls the vehicle speed of the work vehicle 3 based on a command from the work device 2 (request information). Specifically, when the control device 40 switches to the second control and manual driving or automatic driving is performed, a requested vehicle speed is sent from the work device 2 to the communication control unit 43, and the control device 40 obtains the requested vehicle speed, control is performed to match the actual vehicle speed of the work vehicle 3 to the requested vehicle speed.

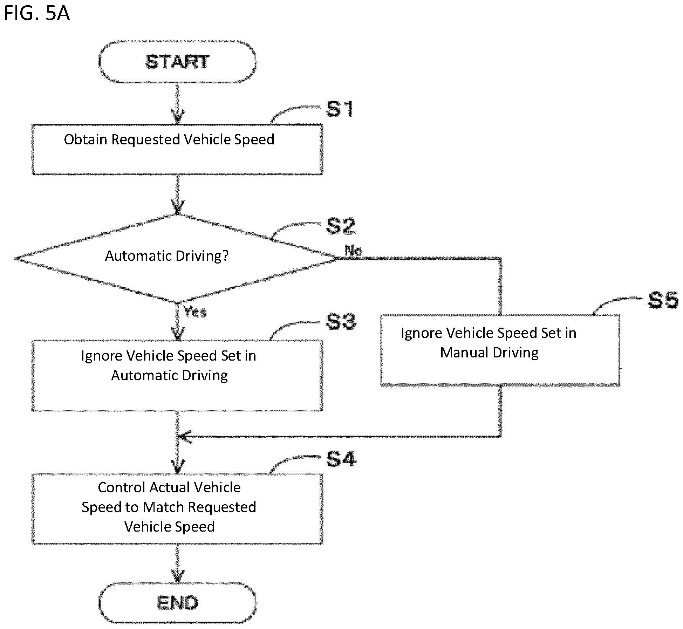

FIG. 5A is a diagram illustrating the action of controlling vehicle speed in the second control.

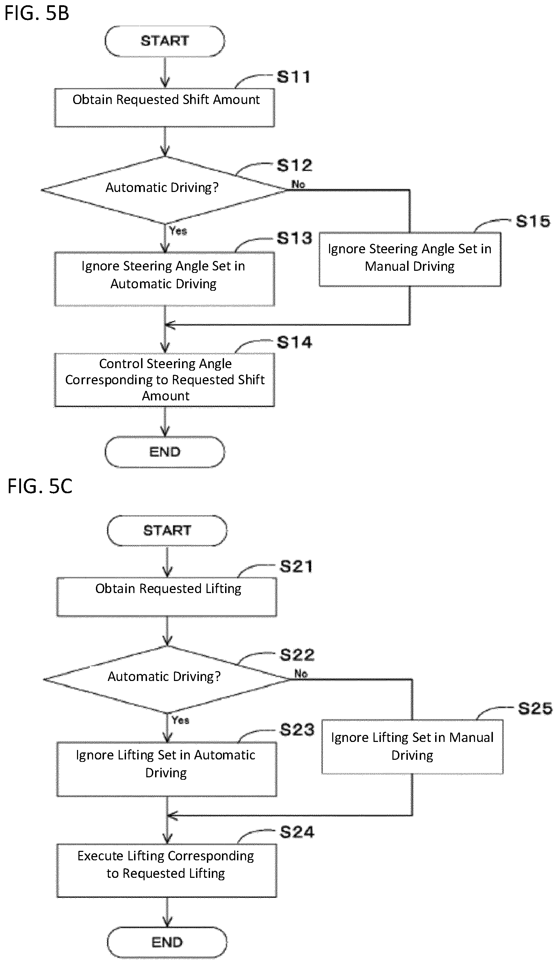

As illustrated in FIG. 5, when the control device 40 obtains the requested vehicle speed (S1), it is determined whether automatic driving is being performed (S2). When the control device 40 has determined that automatic driving is performed (Yes in S2), the control device 40 ignores the vehicle speed set by the automatic driving control unit 40E (S3), and controls the motor rotation speed and transmission stage so that the actual vehicle speed of the work vehicle 3 matches the requested vehicle speed, to set to the vehicle speed requested by the work device 2 (S4). Meanwhile, when the control device 40 has determined that automatic driving is not being performed, that is, when it has been determined that manual driving is being performed (No in S2), the control device 40 ignores the motor rotation speed set in the accelerator 42f and the transmission stage set in the transmission lever 42e (S5), and controls the motor rotation speed and transmission stage so that the actual vehicle speed of the work vehicle 3 matches the required vehicle speed, to set to the vehicle speed requested by the work device 2 (S4).

When switched to the second control using the switching device 53 while operating under manual driving or automatic driving, the control device 40 controls the steering of the work vehicle 3 based on a command from the work device 2 (request information). Specifically, when the control device 40 switches to the second control and manual driving or automatic driving is performed, a requested shift amount is sent from the work device 2 to the communication control unit 43, and the control device 40 obtains the requested shift amount, control is performed to adjust the position of the work device 2 to a position corresponding to the requested shift amount by changing the work vehicle position of the work vehicle 3. The required shift amount is a movement amount or the like that the work device 2 moves to the left or right from the present position with respect to the travelling direction when the work device 2 is travelling straight or the like. For example, the requested shift amount includes the direction and the movement amount moved from the present position, such as 3 cm to the left and 5 cm to the right.

FIG. 5B is a diagram illustrating the action of controlling steering in the second control.

As illustrated in FIG. 5B, when the control device 40 obtains the requested shift amount (S11), it is determined whether automatic driving is being performed (S12). When the control device 40 determines that automatic driving is being performed (Yes in S12), the control device 40 ignores the steering angle calculated by the automatic driving control unit 40E (S13), and controls the steering direction and the steering angle so that the position of the work device 2 is at the position shown by the required shift amount (S14). For example, when the requested shift amount is 3 cm to the left, the control device 40 sets the steering direction of the steering device 11 to the left, and the steering angle is set so that the work device 2 moves about 3 cm from the present position of the work device 2. Furthermore, when the required shift amount is 5 cm to the right, the control device 40 sets the steering direction of the steering device 11 to the right, and the steering angle is set so that the work device 2 moves about 5 cm from the present position of the work device 2.

Meanwhile, when the control device 40 has determined that automatic driving is not being performed, that is, when it has been determined that manual driving is being performed (No in S12), the control device 40 ignores the steering angle set in the steering wheel (steering wheel) 11a (S15) and controls the steering direction and steering angle to set to the position requested by the work device 2 (S14).

When switched to the second control using the switching device 53 while operating under manual driving or automatic driving, the control device 40 controls the attaching device 8 based on a command from the work device 2 (request information). Specifically, when the control device 40 switches to the second control and manual driving or automatic driving is performed, a requested lifting or lowering is sent from the work device 2 to the communication control unit 43, and the control device 40 obtains the requested lifting or lowering, the work device 2 is lifted or lowered to correspond to the requested lifting or lowering by controlling the attaching device 8. The requested lifting or lowering is a request for lifting the work device 2 (lifting request) or a request for lowering the work device 2 (lowering request).

FIG. 5C is a diagram illustrating the action of controlling steering in the second control.

As illustrated in FIG. 5C, when the control device 40 obtains the requested lifting (S21), it is determined whether automatic driving is being performed (S22). When the control device 40 determines that automatic driving is being performed (Yes in S22), the control device 40 ignores the lifting of the attaching device 8 set by the automatic driving control unit 40E (S23), and controls the lifting of the attaching device 8 so that the work device 2 is lifted or lowered as indicated in the requested lifting (S24). For example, when the requested lifting is a request for lifting, the control device 40 extends the lift cylinder 8e of the attaching device 8 to lift the work device 2 even if the work device 2 travels in the straight forward portion L1a. In addition, when the requested lifting is a request for lowering, the control device 40 contracts the lift cylinder 8e of the attaching device 8 to lower the work device 2 even if the work device 2 travels in the turning portion L1b.

Meanwhile, when the control device 40 has determined that automatic driving is not being performed, that is, when it has been determined that manual driving is being performed (No in S22), the control device 40 ignores the operation of the pump switch 42g (S25), and controls the attaching device 8 to control the lifting of the work device 2 so that the work device 2 is lifted and lowered as indicated in the requested lifting (S24).

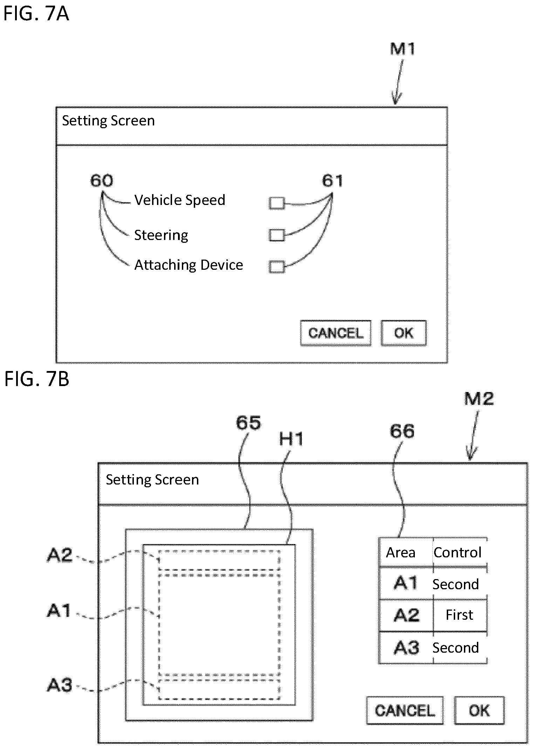

The work machine 1 can select one or more of any of the vehicle speed, steering, and attaching device of the work vehicle. As illustrated in FIG. 1C, the work machine 1 is provided with a display device 50. The display device 50 performs various displays related to the work machine 1. As illustrated in FIG. 7A, when performing a predetermined operation on the display device 50, the control device 40 causes the display device 50 to display the setting screen M1. On the setting screen M1, a plurality of items 60 such as the vehicle speed, steering, and attaching device can be displayed as items 60 for executing control in the second control. On the setting screen M1, when the control device 40 is set to the second control, a plurality of selection portions 61 for specifying whether or not to execute the control corresponding to the plurality of items 60 are displayed. The plurality of selection portions 61 and the plurality of items 60 are associated with each other. For example, when the selection portion 61a corresponding to vehicle speed is selected, the vehicle speed is set to be controlled in the second control, when the selection portion 61b corresponding to steering is selected, steering is set to be controlled in the second control, and when the selection portion 61c corresponding to the attaching device is selected, the steering of the attaching device 8 is set to be controlled in the second control. Whether the plurality of selection portions 61 (61a, 61b, and 61c) are selected can be performed by the driver operating a switch installed around the driver's seat or operating the display device 50.

Note that in the embodiments described above, an example was described wherein the requested vehicle speed, the requested shift amount, and the requested lifting and lowering are described as request information, but the work vehicle 3 may be controlled from the work device 2 according to requested rotation speed, requested pressure, and requested height. For example, when the control device 40 obtains the requested rotation speed, it sets the PTO rotation speed to the requested rotation speed by the PTO control of the PTO control unit 40C. The control device 40 controls the pressure output from the operation control valve 27 when the requested pressure is obtained. When the control device 40 obtains the required height, it performs a lowering operation or a lifting operation so that the lifting device 8 reaches the requested height by the lift control of the lifting control unit 40D.

Moreover, the request information may also be rotation stop (requested stop) of the PTO shaft. In this case, the control device 40 disengages the PTO clutch 5e1 when the requested stop is obtained. The request information may be to set the supply direction of the hydraulic fluid (requested supply direction), and when the control device 40 obtains the requested supply direction, it changes the switching position of the auxiliary valve 27 so that the flow direction of the hydraulic fluid matches the direction indicated in the requested supply direction.

As described above, the switching device 53 constituted by the switch may be used also as a driving switching switch 421 for switching automatic driving between enabled/disabled. When the switching device 53 and the operation changeover switch 421 are used in combination, when the switching device 53 is OFF, the first control is set and automatic driving is switched to be disabled, and when the switching device 53 is ON, the second control is set and automatic driving is switched to be enabled.

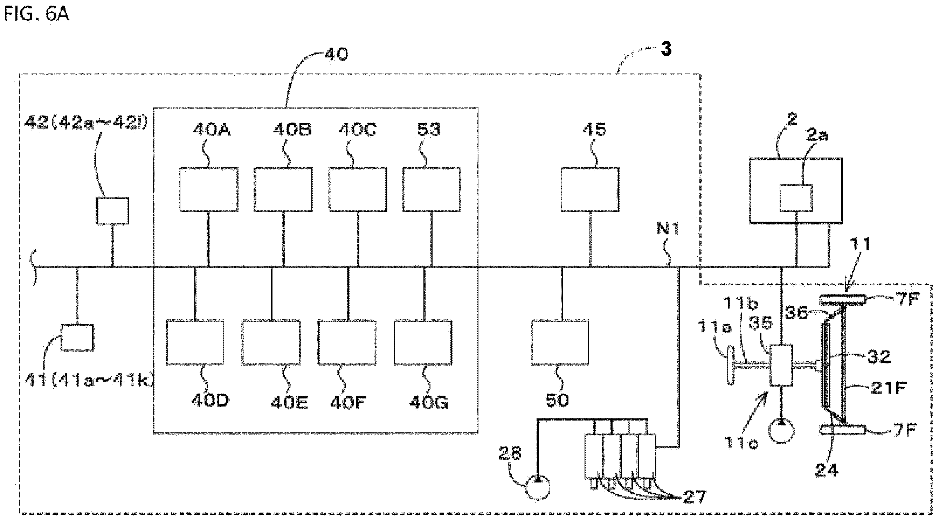

When the control device 40 cannot be set to execute the second control, the switching device 53 may automatically switch to the first control. As illustrated in FIG. 6A, the switching device 53 is constituted by a CPU provided in the control device 40, an electric/electronic circuit, a program stored in the control device 40, and the like. The switching device 53 refers to the specifications of the work vehicle 3 (vehicle specifications). The vehicle specifications are stored in the control device 40, and is information such as whether the work vehicle 3 can perform automatic driving (whether the automatic driving control unit 40E is installed) and whether request information can be received from the work device 2 (whether the communication control unit 43 is installed).

The switching device 53 refers to the vehicle specifications, and when the vehicle specifications indicate that the communication control unit 43 is not installed, automatically switches to the first control and maintains the first control as it is impossible to set the second control in the control device 40. Note that as described above, when a switch is provided on the work vehicle 3 as the switching device 53, it does not switch to the second control even if the switch is operated by the driver.

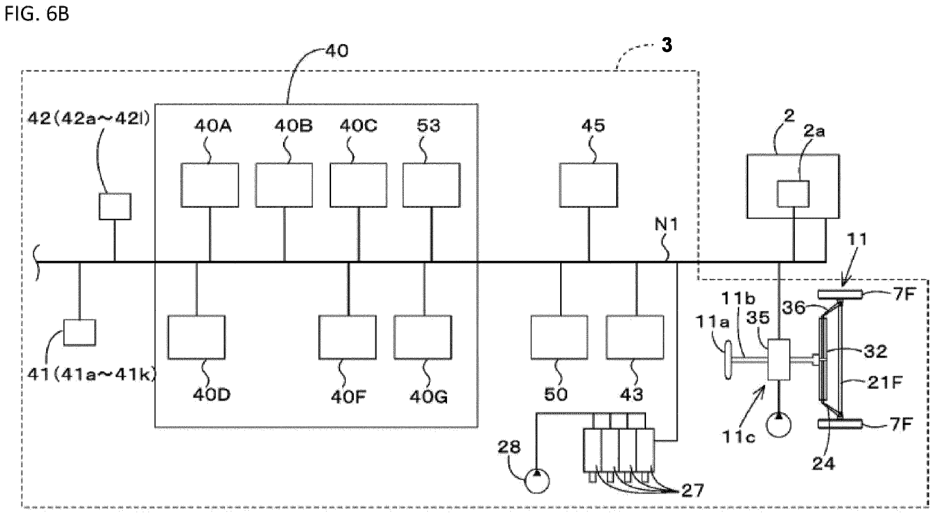

As illustrated in FIG. 6B, in the control device 40, the switching device 53 may automatically switch to the second control when the automatic driving control unit 40E for automatically driving the work vehicle 3 is not provided in the work vehicle 3. Specifically, referring to the vehicle specifications, the switching device 53 automatically switches to the first control and maintains the first control when it is indicated in the vehicle specifications that the automatic driving control unit 40E is not installed. Even in this case, similar to as described above, when a switch is provided on the work vehicle 3 as the switching device 53, it does not switch to the second control even if the switch is operated by the driver.

The switching device 53 may switch between the first control and the second control based on the position of the work vehicle. Specifically, when performing automatic driving, the switching device 53 refers to the work vehicle position and switches to the second control when the work vehicle position is at the straight forward portion L1a and switches to the first control when the work vehicle position is at the turning portion L1b. Even in this case, similar to as described above, when a switch is provided on the work vehicle 3 as the switching device 53, it does not switch to the first control or second control even if the switch is operated by the driver.

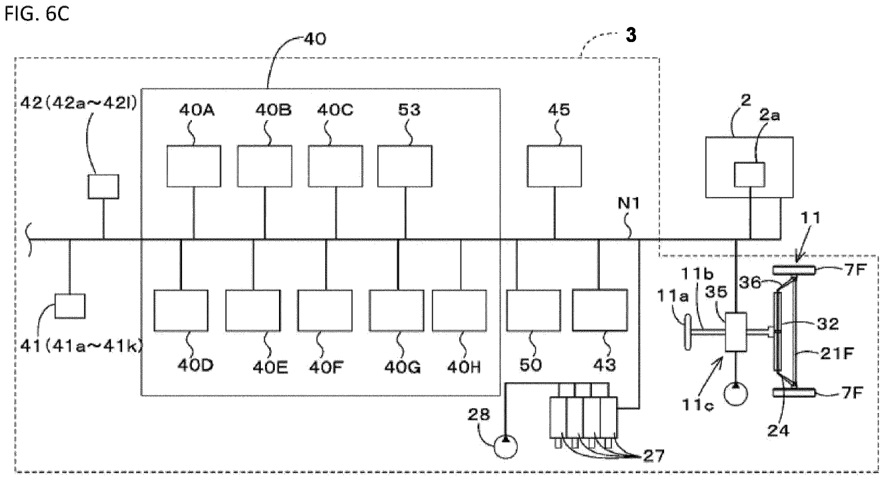

As illustrated in FIG. 6C, the work machine 1 may have a switching area creation portion 40H. The switching area creation portion 40H is constituted by a CPU, an electric/electronic circuit, a program stored in the control device 40, and the like. As illustrated in Fig. 7B, the switching area creation portion 40H creates work ranges A1 and A2 of the work vehicle 3. Moreover, the switching area creation portion 40H sets the switching of the first control and the second control for each work range A1, A2, and A3.

Specifically, as illustrated in FIG 7B, when performing a predetermined operation on the display device 50, the switching area creation portion 40H displays a setting screen M2 on the display device 50. The setting screen M2 includes, for example, a field portion 65 for setting a plurality of work ranges A1, A2, and A3, and a control setting portion 66 for setting whether the first control or second control is performed in the work ranges A1, A2, and A3. Position information (latitude and longitude) is assigned to the field portion 65. A range of a farm field H1 can be set in the field portion 65, and the work ranges A1, A2, and A3 can be set in the farm field H1 by operating a software switch provided on the setting screen M2 or a hardware switch provided on the work vehicle 3.

The control setting portion 66 displays identification information for identifying the work ranges A1, A2, and A3 such as the name of the work range, and a portion for selecting either the first control or second control, and depending on the operation of the software switch or the hardware switch provided on the work vehicle 3, an association is made between the work ranges A1, A2, and A3 and the control (first control and second control), making it possible to set the switching between the first control and second control for each of the work ranges A1, A2, and A3.

Note that the traveling schedule line L1 during automatic driving may be able to be set in the field portion 65 of FIG. 7B.

In the embodiments described above, the controller 40 is an electric/electronic circuit, a program, or the like, but a model constructed by deep machine learning of an artificial intelligence may be installed in the control device 40. The control device 40 obtains various information obtained by the control device 40 (detection information such as a detected value detected by the detection device 41, operation information of the operation member 42, and control information) and the like, and constructs an operation model supporting the operation of the work vehicle 3 or work device 2 by deep machine learning of an artificial intelligence. The action model performs reinforcement learning every time the work machine 1 operates by traveling, working, or the like. When the control device 40 has the action model, the present information is applied to the action model when the work machine 1 travels or works, and the control of the work vehicle 3 or the work device 2 based on the result (output result) output by the action model.

Note that it is preferable to provide conditions when controlling (operating) the work machine 1 using a model of artificial intelligence (action model). For example, when the driver has driven a work machine 1 having an installed artificial intelligence model (operation model), the control device 40 sets the control by the operation model as enabled, and when the driver has never driven a work machine 1 having an installed artificial intelligence model (operation model) or has little experience doing such, sets control by the operation model as disabled.

Furthermore, the control device 40 sets control by the artificial intelligence model (operation model) to ineffective when the angle of the farm field in which the work is performed by the work machine 1 is equal to or greater than a threshold (for example, 10° or greater), and sets control by the artificial intelligence model (operation model) to effective when the angle of the farm field is less than the threshold.

A work machine 1 is provided with a work vehicle 3 capable of traveling, a work device 2 attached to the work vehicle 3, a control device 40 capable of executing either a first control for controlling the work device 2 from the work vehicle 3, or a second control for controlling the work vehicle 3 based on a command from the work device 2, and a switching device 53 for switching between the first control and the second control. Thus, while the work device 2 can be controlled from the work vehicle 3, the work vehicle 3 can also be controlled from the work device 2, and as required, the controlling of the work device 2 from the work vehicle 3 and the controlling of the work vehicle 3 from the work device 2 can be easily switched. That is, it is possible to operate in accordance with respective requests from a work vehicle and a work device, and improve workability.

The work machine 1 controls the vehicle speed of the work vehicle 3 based on a command from the work device 2 when the switching device 53 has switched to the second control. This, the work device 2 can control the vehicle speed of the work vehicle 3. For example, when the work device 2 attempts to increase vehicle speed to more than the present vehicle speed while the work device 2 is performing work, the vehicle speed can be increased by making a request from the work device 2 to the work vehicle 3, and when attempting to decrease vehicle speed, the vehicle speed can be decreased by making a request from the work device 2 to the work vehicle 3, making it possible to adjust the speed using the work device 2.

The work machine 1 controls steering of the work vehicle 3 based on a command from the work device 2 when the switching device 53 has switched to the second control. Thus, the work device 2 can control the steering of the work vehicle 3. For example, when the work position is shifted to the left from the present position while the work device 2 is performing work, the work position can be shifted to the left by making a request from the work device 2 to the work vehicle 3, and when the work position is shifted to the right, the work position can be shifted to the right by making a request from the work device 2 to the work vehicle 3, making it possible to adjust the position in the horizontal direction using the work device 2.

The work machine 1 is provided with an attaching device 8 capable of attaching the work vehicle 3 and the work device 2 and changing a posture of the work device 2, wherein the attaching device 8 is controlled based on a command from the work device 2 when the switching device 53 has switched to the second control. Thus, the work device 2 can control the attaching device 8. For example, when attempting to lift the work device 2 from the present position while the work device 2 is performing work, the work device 2 can be lifted by making a request from the work device 2 to the work vehicle 3, and when attempting to lower the work device 2, the work device 2 can be lowered by making a request from the work device 2 to the work vehicle 3, making it possible to adjust the position in the vertical direction using the work device 2.

The work machine 1 is provided with an attaching device 8 capable of attaching the work vehicle 3 and the work device 2 and changing a posture of the work device 2, wherein one or more of vehicle speed, steering, or the attaching device 8 of the work vehicle 3 is controlled based on a command from the work device 2 when the switching device 53 has switched to the second control. Thus, one or more of vehicle speed, steering, or the attaching device 8 of the work vehicle 3 can be optionally selected as a control target when controlling the work vehicle 3 from the work device 2, and it is also possible to select a control target depending on the work.

The work machine 1 is provided with an attaching device 8 capable of attaching the work vehicle 3 and the work device 2 and changing a posture of the work device 2, wherein a posture of the work device 2 is controlled based on a command from the work vehicle 3 when the switching device 53 has switched to the first control. Thus, in addition to controlling the work vehicle 3 from the work device 2, the posture of the work device 2 can also be changed from the work vehicle 3, making it possible to also adjust the posture of the work device 2 from the work vehicle 3 side depending on the work thereof.

The control device 40 has an automatic driving control unit 40E for automatically driving the work vehicle 3, and when switched to the first control using the switching device 53, controls the work device 2 based on the automatic driving of the work vehicle 3. Thus, controlling the work device 2 from the work vehicle 3 side can be prioritized when automatically driving the work vehicle 3.

The switching device 53 automatically switches to the first control when a setting for executing the second control is not possible in the control device 40. Thus, for specifications wherein control cannot be performed in accordance with requests from the work device 2, that is, wherein operations cannot be performed in accordance with requests from the work device 2, it can be fixed to control the work vehicle 3 from the work vehicle 3, and the work machine 1 can be easily operated by the driver without having to investigate whether there are specifications wherein operations cannot be performed in accordance with requests from the work device 2 and switch to the first control.

The switching device 53 automatically switches to the second control when an automatic driving control unit 40E for automatically driving the work vehicle 3 is not provided in the work vehicle 3. Thus, when there are specifications wherein automatic driving of the work vehicle 3 is not possible, it is fixed to controlling the work vehicle 3 side from the work device 2, and the work machine 1 can be easily operated by the driver without having to investigate whether there are specifications wherein automatic driving is possible and switch to the second control.

The work machine 1 is provided with a positioning device 41K for positioning a work vehicle position, which is the position of the work vehicle 3, wherein the switching device 53 switches based on the work vehicle position. Thus, the first control and second control can be easily switched simply by, for example, referring to the vehicle position, which is the position of the work vehicle 3, therefore improving operability. For example, it is possible to automatically switch to either the first control or second control inside and outside a farm field. Alternatively, either the priority of the first control or the priority of the second control set at each prescribed position can be automatically switched even in a farm field.

The work machine 1 is provided with a switching area creation unit 60H for setting a work range of the work vehicle 3 and creating switching between the first control and the second control for each of the set work ranges. Thus, the first control and the second control can be easily set in the work range of the work vehicle 3, and the first control and the second control can be easily switched according to the situation in the work range.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Description of Reference Numerals]

- 1: : Work machine
- 2: : Work device
- 2a: : Control device
- 3: : Work vehicle
- 8: : Attaching device
- 40: : Control device
- 40H: : Switching area creation portion
- 41k: : Positioning device
- 53: : Switching device
- 60H: : Switching area creation portion
- A1: : Work range
- A2: : Work range
- P1: : Work vehicle position

## Claims

1. A work machine (1) comprising:
a work vehicle (3);
a work device (2) coupled to the work vehicle (3);
a control device (40) configured to execute:
a first control to control the work device (2) based on a first command from the work vehicle (3); and
a second control to control the work vehicle (3) based on a second command from the work device (2); and
a switching device (53) configured to switch the control device (40) between the first control and the second control,
**characterized in that**:
when the switching device (53) is OFF, the control device (40) is configured to execute the first control, and when the switching device (53) is ON, the control device (40) is configured to execute the second control, and
the switching device (53) is prevented from switching when a driver is not seated on a seat (10) of the work vehicle (3).

2. The work machine (1) according to claim 1, wherein the control device (40) is configured to control a vehicle speed of the work vehicle (3) based on the second command when the switching device (53) has switched the control device (40) to the second control.

3. The work machine (1) according to claim 1 or claim 2, wherein the control device (40) is configured to control a steering of the work vehicle (3) based on the second command when the switching device (53) has switched the control device (40) to the second control.

4. The work machine (1) according to any one of claims 1-3, further comprising:
a coupling device (8) configured to couple the work device (2) to the work vehicle (3) and change a posture of the work device (2), wherein
the control device (40) is configured to control the coupling device (8) based on the second command when the switching device (53) has switched the control device to the second control.

5. The work machine (1) according to claim 1, further comprising:
a coupling device (8) configured to couple the work device (2) to the work vehicle (3) and change a posture of the work device (2), wherein
the control device (40) is configured to selectively control at least one of a vehicle speed, a steering, and the coupling device (8) of the work vehicle (3) based on the second command when the switching device (53) has switched the control device (40) to the second control.

6. The work machine (1) according to any one of claims 1-5, further comprising:
a coupling device (8) configured to couple the work device (2) to the work vehicle (3) and change a posture of the work device (2), wherein
the control device (40) is configured to control a posture of the work device (2) based on the first command when the switching device (53) has switched the control device (40) to the first control.

7. The work machine (1) according to any one of claims 1-6, wherein
the control device (40):
comprises an automatic driving controller (40E) configured to automatically drive the work vehicle (3), and
is configured to control the work device (2) based on the automatic driving by the automatic driving controller (40E) when the switching device (53) has switched the control device (40) to the first control.

8. The work machine (1) according to claim 7, wherein the switching device (53) is configured to automatically switch the control device (40) to the first control when the control device (40) cannot execute a setting for executing the second control.

9. The work machine (1) according to any one of claims 1-8, wherein
the work vehicle (3) comprises a detection device (41) configured to detect a state of the work vehicle (3) and optionally including at least one of a water temperature sensor, a fuel sensor, a motor rotation sensor, an accelerator pedal sensor, a steering angle sensor, an angle sensor, an inclination detection sensor, a speed sensor, a shaft rotation sensor, a battery sensor, and a position sensor, and
in the first control, the control device (40) is configured to control the work device (3) based on a detected value obtained from the detection device (41).

10. The work machine (1) according to any one of claims 1-9, wherein
the work vehicle (3) comprises an operating device (42) including at least one of a shuttle lever, an ignition switch, a transmission lever, a transmission switch, a transmission lever, an accelerator, a pump switch, a height setting dial, a vehicle speed lever, a hydraulic operation tool, a rotation setting tool, and
in the first control, the control device (40) is configured to control the work device (3) based on an operation of the operating device (42).

11. The work machine (1) according to any one of claims 1-10, wherein the work vehicle (3) is a tractor.

12. The work machine (1) according to any one of claims 1-11, wherein the work device (2) is at least one of a tilling device, a fertilizer application device, a pesticide application device, a harvesting device, a reaping device, a dispersing device, a grass-collecting device, and a shaping device.

## Patentansprüche

1. Eine Arbeitsmaschine (1), aufweisend:
ein Arbeitsfahrzeug (3);
eine Arbeitsvorrichtung (2), die mit dem Arbeitsfahrzeug (3) gekoppelt ist
eine Steuerungseinheit (40), konfiguriert zum Ausführen:
einer ersten Steuerung, um die Arbeitsvorrichtung (2) basierend auf einem ersten Befehl von dem Arbeitsfahrzeug (3) zu steuern; und
einer zweiten Steuerung, um das Arbeitsfahrzeug (3) basierend auf einem zweiten Befehl von der Arbeitsvorrichtung (2) zu steuern; und
eine Schaltvorrichtung (53), die konfiguriert ist, die Steuerungseinheit (40) zwischen der ersten Steuerung und der zweiten Steuerung umzuschalten,
**dadurch gekennzeichnet, dass**:
wenn die Schaltvorrichtung (53) AUS ist, die Steuerungseinheit (40) konfiguriert ist, die erste Steuerung auszuführen, und wenn die Schaltvorrichtung (53) EIN ist, die Steuerungseinheit (40) konfiguriert ist, die zweite Steuerung auszuführen, und
die Schaltvorrichtung (53) am Schalten gehindert wird, wenn ein Fahrer nicht auf einem Sitz (10) des Arbeitsfahrzeugs (3) sitzt.

2. Die Arbeitsmaschine (1) nach Anspruch 1, wobei die Steuerungseinheit (40) konfiguriert ist, eine Fahrzeuggeschwindigkeit des Arbeitsfahrzeugs (3) basierend auf dem zweiten Befehl zu steuern, wenn die Schaltvorrichtung (53) die Steuerungseinheit (40) auf die zweite Steuerung umgeschaltet hat.

3. Die Arbeitsmaschine (1) nach Anspruch 1 oder Anspruch 2, wobei die Steuerungsvorrichtung (40) konfiguriert ist, um eine Lenkung des Arbeitsfahrzeugs (3) basierend auf dem zweiten Befehl zu steuern, wenn die Schalteinrichtung (53) die Steuerungseinheit (40) auf die zweite Steuerung umgeschaltet hat.

4. Die Arbeitsmaschine (1) nach einem der Ansprüche 1 bis 3, ferner aufweisend:
eine Kopplungsvorrichtung (8), die konfiguriert ist, um die Arbeitsvorrichtung (2) mit dem Arbeitsfahrzeug (3) zu koppeln und eine Stellung der Arbeitsvorrichtung (2) zu ändern, wobei
die Steuerungsvorrichtung (40) konfiguriert ist, die Kopplungsvorrichtung (8) basierend auf dem zweiten Befehl zu steuern, wenn die Schaltvorrichtung (53) die Steuerungsvorrichtung auf die zweite Steuerung umgeschaltet hat.

5. Die Arbeitsmaschine (1) nach Anspruch 1, ferner aufweisend:
eine Kopplungsvorrichtung (8), die konfiguriert ist, um die Arbeitsvorrichtung (2) mit dem Arbeitsfahrzeug (3) zu koppeln und eine Haltung der Arbeitsvorrichtung (2) zu ändern, wobei
die Steuerungseinheit (40) konfiguriert ist, um selektiv mindestens eine Fahrzeuggeschwindigkeit, eine Lenkung und die Kopplungsvorrichtung (8) des Arbeitsfahrzeugs (3) basierend auf dem zweiten Befehl zu steuern, wenn die Schaltvorrichtung (53) die Steuerungseinheit (40) auf die zweite Steuerung umgeschaltet hat.

6. Die Arbeitsmaschine (1) nach einem der Ansprüche 1 bis 5, ferner aufweisend:
eine Kopplungsvorrichtung (8), die konfiguriert ist, um die Arbeitsvorrichtung (2) mit dem Arbeitsfahrzeug (3) zu koppeln und eine Stellung der Arbeitsvorrichtung (2) zu ändern, wobei
die Steuerungseinheit (40) konfiguriert ist, um eine Stellung der Arbeitsvorrichtung (2) basierend auf dem ersten Befehl zu steuern, wenn die Schaltvorrichtung (53) die Steuerungseinheit (40) auf die erste Steuerung geschaltet hat.

7. Die Arbeitsmaschine (1) nach einem der Ansprüche 1 bis 6, wobei die Steuerungseinheit (40):
eine automatische Fahrsteuerung (40E) aufweist, die zum automatischen Fahren des Arbeitsfahrzeugs (3) konfiguriert ist, und
konfiguriert ist, um die Arbeitsvorrichtung (2) basierend auf dem automatischen Fahren durch die automatische Fahrsteuerung (40E) zu steuern, wenn die Schaltvorrichtung (53) die Steuereinrichtung (40) auf die erste Steuerung umgeschaltet hat.

8. Die Arbeitsmaschine (1) nach Anspruch 7, wobei die Schaltvorrichtung (53) konfiguriert ist, um die Steuerungseinheit (40) automatisch auf die erste Steuerung umzuschalten, wenn die Steuerungseinheit (40) eine Einstellung zum Ausführen der zweiten Steuerung nicht ausführen kann.

9. Die Arbeitsmaschine (1) nach einem der Ansprüche 1 bis 8, wobei
das Arbeitsfahrzeug (3) eine Erfassungsvorrichtung (41) aufweist, die konfiguriert ist, um einen Zustand des Arbeitsfahrzeugs (3) zu erfassen, und optional mindestens einen Wassertemperatursensor, einen Kraftstoffsensor, einen Motorrotationssensor, einen Beschleunigungspedalsensor, einen Lenkwinkelsensor, einen Winkelsensor, einen Neigungserfassungssensor, einen Geschwindigkeitssensor, einen Wellenrotationssensor, einen Batteriesensor und einen Positionssensor aufweist, und
bei der ersten Steuerung die Steuerungseinheit (40) konfiguriert ist, um die Arbeitsvorrichtung (3) basierend auf einem von der Erfassungsvorrichtung (41) erhaltenen Erfassungswert zu steuern.

10. Die Arbeitsmaschine (1) nach einem der Ansprüche 1 bis 9, wobei
das Arbeitsfahrzeug (3) eine Betätigungsvorrichtung (42) aufweist, die mindestens einen Wendegetriebehebel, einen Zündschalter, einen Getriebehebel, einen Getriebeschalter, einen Übertragungshebel, ein Gaspedal, einen Pumpenschalter, einen Höheneinstellregler, einen Fahrzeuggeschwindigkeitshebel, ein hydraulisches Betätigungswerkzeug, ein Rotationseinstellwerkzeug aufweist, und
bei der ersten Steuerung die Steuerungseinheit (40) konfiguriert ist, um die Arbeitsvorrichtung (3) basierend auf einem Betrieb der Bedienvorrichtung (42) zu steuern.

11. Die Arbeitsmaschine (1) nach einem der Ansprüche 1 bis 10, wobei das Arbeitsfahrzeug (3) ein Traktor ist.

12. Die Arbeitsmaschine (1) nach einem der Ansprüche 1 bis 11, wobei es sich bei der Arbeitsvorrichtung (2) um mindestens eine Bodenbearbeitungsvorrichtung, eine Düngerausbringungsvorrichtung, eine Pestizidausbringungsvorrichtung, eine Erntevorrichtung, eine Mähvorrichtung, eine Streuvorrichtung, eine Grassammelvorrichtung und eine Formgebungsvorrichtung handelt.

## Revendications

1. Machine de travail (1) comprenant :
un véhicule de travail (3) ;
un dispositif de travail (2) couplé au véhicule de travail (3) ;
un dispositif de contrôle (40) configuré pour exécuter :
un premier contrôle pour contrôler le dispositif de travail (2) sur la base d'une première commande du véhicule de travail (3) ; et
un second contrôle pour contrôler le véhicule de travail (3) sur la base d'une seconde commande du dispositif de travail (2) ; et
un dispositif de commutation (53) configuré pour commuter le dispositif de contrôle (40) entre le premier contrôle et le second contrôle,
**caractérisé en ce que** :
lorsque le dispositif de commutation (53) est désactivé, le dispositif de contrôle (40) est configuré pour exécuter le premier contrôle, et lorsque le dispositif de commutation (53) est activé, le dispositif de contrôle (40) est configuré pour exécuter le second contrôle, et
le dispositif de commutation (53) ne peut pas se mettre en commutation lorsqu'un conducteur n'est pas assis sur un siège (10) du véhicule de travail (3).

2. Machine de travail (1) selon la revendication 1, dans laquelle le dispositif de contrôle (40) est configuré pour contrôler une vitesse du véhicule de travail (3) sur la base de la seconde commande lorsque le dispositif de commutation (53) a commuté le dispositif de contrôle (40) sur le second contrôle.

3. Machine de travail (1) selon la revendication 1 ou la revendication 2, dans laquelle le dispositif de contrôle (40) est configuré pour contrôler une direction du véhicule de travail (3) sur la base de la seconde commande lorsque le dispositif de commutation (53) a commuté le dispositif de contrôle (40) sur le second contrôle.

4. Machine de travail (1) selon l'une quelconque des revendications 1 à 3, comprenant en outre :
un dispositif de couplage (8) configuré pour coupler le dispositif de travail (2) au véhicule de travail (3) et modifier une position du dispositif de travail (2), dans laquelle
le dispositif de contrôle (40) est configuré pour contrôler le dispositif de couplage (8) sur la base de la seconde commande lorsque le dispositif de commutation (53) a commuté le dispositif de contrôle sur le second contrôle.

5. Machine de travail (1) selon la revendication 1, comprenant en outre :
un dispositif de couplage (8) configuré pour coupler le dispositif de travail (2) au véhicule de travail (3) et modifier une position du dispositif de travail (2), dans laquelle
le dispositif de contrôle (40) est configuré pour contrôler sélectivement au moins un d'une vitesse du véhicule, une direction et le dispositif de couplage (8) du véhicule de travail (3) sur la base de la seconde commande lorsque le dispositif de commutation (53) a commuté le dispositif de contrôle (40) sur le second contrôle.

6. Machine de travail (1) selon l'une quelconque des revendications 1 à 5, comprenant en outre :
un dispositif de couplage (8) configuré pour coupler le dispositif de travail (2) au véhicule de travail (3) et modifier une position du dispositif de travail (2), dans laquelle
le dispositif de contrôle (40) est configuré pour contrôler une position du dispositif de travail (2) sur la base de la première commande lorsque le dispositif de commutation (53) a commuté le dispositif de contrôle (40) sur le premier contrôle.

7. Machine de travail (1) selon l'une quelconque des revendications 1 à 6, dans lequel le dispositif de contrôle (40) :
comprend un contrôleur de conduite automatique (40E) configuré pour conduire automatiquement le véhicule de travail (3), et
est configuré pour contrôle le dispositif de travail (2) sur la base de la conduite automatique par le contrôleur de conduite automatique (40E) lorsque le dispositif de commutation (53) a commuté le dispositif de contrôle (40) sur le premier contrôle.

8. Machine de travail (1) selon la revendication 7, dans laquelle le dispositif de commutation (53) est configuré pour commuter automatiquement le dispositif de contrôle (40) sur le premier contrôle lorsque le dispositif de contrôle (40) ne peut pas exécuter un réglage pour exécuter le second contrôle.

9. Machine de travail (1) selon l'une quelconque des revendications 1 à 8, dans laquelle
le véhicule de travail (3) comprend un dispositif de détection (41) configuré pour détecter un état du véhicule de travail (3) et incluant optionnellement au moins un d'un capteur de température d'eau, un capteur de carburant, un capteur de rotation de moteur, un capteur de pédale d'accélérateur, un capteur d'angle de braquage, un capteur d'angle, un capteur de détection d'inclinaison, un capteur de vitesse, un capteur de rotation d'arbre, un capteur de batterie et un capteur de position, et
dans le premier contrôle, le dispositif de contrôle (40) est configuré pour contrôler le dispositif de travail (3) sur la base d'une valeur détectée obtenue à partir du dispositif de détection (41).

10. Machine de travail (1) selon l'une quelconque des revendications 1 à 9, dans laquelle
le véhicule de travail (3) comprend un dispositif de commande (42) incluant au moins un d'un levier d'inverseur, un commutateur d'allumage, un levier de transmission, un commutateur de transmission, un accélérateur, un commutateur de pompe, un cadran de réglage de hauteur, un levier de vitesse du véhicule, un outil de commande hydraulique, un outil de réglage de rotation, et
dans le premier contrôle, le dispositif de contrôle (40) est configuré pour contrôler le dispositif de travail (3) sur la base d'un fonctionnement du dispositif de commande (42).

11. Machine de travail (1) selon l'une quelconque des revendications 1 à 10, dans lequel le véhicule de travail (3) est un tracteur.

12. Machine de travail (1) selon l'une quelconque des revendications 1 à 11, dans laquelle le dispositif de travail (2) est au moins un d'un dispositif de labourage, un dispositif d'application d'engrais, un dispositif d'application de pesticides, un dispositif de récolte, un dispositif de moissonnage, un dispositif de dispersion, un dispositif de ramassage d'herbe et un dispositif de formage.
